# EUROPÄISCHE PATENTSCHRIFT

(11) **EP 1 646 254 B1**
(45) Veröffentlichungstag und Bekanntmachung des Hinweises auf die Patenterteilung: **16.04.2008**
(21) Anmeldenummer: 04104978.4
(22) Anmeldetag: 11.10.2004
(51) Int. Cl.: H04Q 7/32

(54) **Identifizierungs- und/oder Authentifizierungsmethode anhand von Fingerabdrücken**
Identification and/or authentification method by means of fingerprints
Methode d'identification et/ou d'authentification par empreintes digitales

(43) Veröffentlichungstag der Anmeldung: 12.04.2006
(73) Patentinhaber: Swisscom Mobile AG, 3050 Bern (CH)
(72) Erfinder: Ritter, Rudolf, 3052, Zollikofen (CH); Lauper, Eric, 3014, Bern (CH)
(74) Vertreter: P&TS Patents & Technology Surveys SA

(56) Entgegenhaltungen:
- EP-A- 1 424 659
- US-A- 5 420 936
- US-A1- 2002 095 586
- US-A1- 2002 194 003

## Beschreibung

Die vorliegende Erfindung betrifft eine Methode und ein System zur Identifizierung und/oder zur Authentifizierung eines Benutzers. Die vorliegende Erfindung betrifft insbesondere eine Methode und ein System zur Identifizierung und/oder zur Authentifizierung des Benutzers eines Mobilgeräts in einer Serverapplikation.

Mit manchen heutigen Mobilgeräten wie zum Beispiel Mobiltelefonen, PDAs (Personal Digital Assistant), Laptops, usw. mit integrierter Mobilfunkschnittstelle, usw. können Datenverbindungen über ein Mobilfunknetzwerk aufgebaut werden. Über solche Verbindungen kann der Benutzer eines Mobilgeräts zum Beispiel auf einem Fernserver zugreifen (beispielsweise über das Internet, über ein Extranet oder über ein WAP-Netz) und mit diesem Server in beide Richtungen Daten austauschen.

Dabei kann der Zugriff auf manche Daten (zum Beispiel vertrauliche oder geschützte Daten) im Fernserver geschützt und nur identifizierten und authentifizierten Benutzern gewährt werden. Da Mobilgeräte und SIM-Karten gestohlen oder von mehreren unterschiedlichen Benutzern verwendet werden können, kann keine persönliche Identifizierung gewährleistet werden.

Eine zusätzliche Identifizierung und/oder Authentifizierung wird oft gewonnen, indem ein geheimer Kode (zum Beispiel ein Passwort oder die Kombination einer Benutzeridentifizierung mit einem geheimen Passwort) verlangt wird.

Wenn die eingegebenen Daten mit den Referenzdaten übereinstimmen, dann wird der Benutzer als authentifiziert betrachtet und es wird ihm Zugriff auf die geschützten Daten im Fernserver gewährt.

Die Eingabe solcher Identifizierungs- und/oder Authentifizierungsdaten kann unter Umständen unpraktisch sein, zum Beispiel, wenn sie auf dem Keypad eines Mobiltelefons eingegeben werden müssen. Ausserdem werden bekannterweise oft zu einfache Passwörter gewählt, die leicht erraten werden können, oder zu komplizierte Passwörter verlangt, die vergessen werden und anderswo notiert werden.

Biometrische Identifizierung- und Authentifizierungsverfahren sind auch bekannt, bei welchen die Identität eines Benutzers anhand von biometrischen Parametern erkannt und/oder geprüft wird. PDAs, Laptops, Mobilfunktelefone und Eingabemittel (zum Beispiel Tastaturen und Mäuse, mit Fingerabdrucklesern) sind auch schon bekannt und werden verwendet, um benutzerpersönliche Parameter zu erfassen und an einen Fernserver zu senden. Wird der Fingerabdruck erkannt, dann gilt der Benutzer als authentifiziert.

Die Patentschrift US 2002/0095586 A1 offenbart eine kontinuierliche Authentifizierung eines Benutzers eines Rechengerätes. Biometrische Sensoren werden vorzugsweise dazu benutzt, um ldentifizierungsinformation der Nutzer des Rechengerätes zu erhalten. Diese erhaltene Information wird mit vorher gespeicherter biometrischer Information verglichen, die den rechtmäßigen Eigentümer des Gerätes identifiziert. Falls die Information übereinstimmt, kann angenommen werden, dass der Benutzer der Gerätebesitzer ist, und die Ausführung einer sicherheitskritischen Transaktion wird zugelassen, solange die biometrische Eingabe nicht unterbrochen wird.

Die Patentschrift US 5,420,936 offenbart eine Methode, bei der auf einem Computerdisplay berührungsempfindliche Felder für die Auswahl durch einen Nutzer bereitgestellt werden. Nachdem eines der Felder mit der Fingerspitze berührt worden ist, wird der Fingerabdruck analysiert und mit einer Liste von autorisierten Fingerabdrücken verglichen. Nach erfolgreicher Überprüfung des Fingerabdrucks erhält der Nutzer Zugang zum ausgewählten Programm.

Die Patentanmeldung US 2002/0194003 offenbart ein Client-Server-Sicherheitssystem. Das Client-Server-Sicherheitssystem enthält ein Client-System, das erste biometrische Daten empfängt und über eine erste Stufe der Autorisierungsprozedur verfügt. In einem Ausführungsbeispiel handelt es sich bei den ersten biometrischen Daten um Sprachdaten und die erste Stufe der Autorisierungsprozedur umfasst einen ersten Sprechererkennungs-Algorithmus. Ein Server-System wird bereitgestellt, um zweite biometrische Daten zu empfangen. Das Server-System enthält eine zweite Stufe der Autorisierungsprozedur. In einem Ausführungsbeispiel sind die zweiten biometrischen Daten Sprachdaten und die zweite Stufe der Autorisierungsprozedur umfasst einen zweiten Sprechererkennungs-Algorithmus. In einem weiteren Ausführungsbeispiel umfassen die erste und die zweite Stufe der Autorisierungsprozedur unterschiedliche biometrische Algorithmen.

Solche Verfahren verlangen jedoch meistens einen zusätzlichen Sensor auf dem Mobilgerät, der bei stark miniaturisierten Geräten schwer integrierbar ist. Ausserdem wird beim Zugang zum geschützten Server ein zusätzlicher Schritt für die Erfassung der biometrischen Parameter verlangt, was den Zugang weniger bequem macht.

Wird der Fingerabdruck nicht erkannt (zum Beispiel weil der Benutzer schmutzige oder schweissnasse Finger hat) oder weil er seinen Finger in einer anderen Richtung über den Fingerabdrucksensor gezogen hat, oder mit einem anderen Druck, muss der Vorgang wiederholt werden, und der Benutzer wird aufgefordert, einen neuen Fingerabdruck zu erfassen. Dies erweist sich als unpraktisch.

Die Authentifizierung des Benutzers wird ausserdem anhand des Resultats eines einzigen Lesens der Fingerabdrücke durchgeführt, was eine gewisse Unsicherheit mit sich bringt, welche von der Genauigkeit der Erkennungsmethode abhängig ist.

Ein Ziel der Erfindung ist also, eine Methode zur Identifizierung und/oder zur Authentifizierung des Benutzers eines Mobilgeräts vorzuschlagen, welche die Nachteile der Methoden des Standes der Technik nicht aufweist.

Ein anderes Ziel der Erfindung ist, eine sicherere Methode zur Identifizierung und/oder zur Authentifizierung des Benutzers eines Mobilgeräts in einer Serverapplikation vorzuschlagen.

Ein weiteres Ziel der Erfindung ist, eine für den Benutzer praktischere und einfachere Identifizierungs- und/oder Authentifizierungsmethode vorzuschlagen.

Diese Ziele werden mit Hilfe einer Methode, eines Servers und eines Programmprodukts erreicht, welche die Merkmale des entsprechenden unabhängigen Anspruchs aufweisen. Bevorzugte Ausführungsformen werden ausserdem durch die abhängigen Ansprüche angegeben.

Erreicht werden diese Ziele insbesondere durch eine Methode zur Identifizierung und/oder zur Authentifizierung eines Benutzers eines Mobilgeräts in einer Serverapplikation anhand von Fingerabdrücken des besagten Benutzers, die durch haptische Eingabemittel erfasst werden, wobei die besagte Methode folgende Schritte umfasst:
- Der Benutzer navigiert mit den besagten haptischen Eingabemitteln in einem freien Teil des Servers und/oder gibt mit den besagten haptischen Eingabemitteln Befehle ein, um sich im besagten freien Teil des Servers zu bewegen,
- gleichzeitig werden Fingerabdrücke des besagten Benutzers durch die besagten haptischen Eingabemittel erfasst,
- spätestens wenn der besagte Benutzer auf einen Teil des Servers zugreifen will, der eine Identifizierung beziehungsweise eine Authentifizierung verlangt, wird der Benutzer anhand der besagten Fingerabdrücke identifiziert beziehungsweise authentifiziert,
- der Zugang auf den benannte Teil des Servers wird ohne explizite Identifizierungs- beziehungsweise Authentifizierungs-Aufforderung gewährt, wenn der besagte Benutzer im vorherigen Schritt identifiziert beziehungsweise authentifiziert wurde.

Dies hat den Vorteil, dass der Benutzer oft direkt und ohne explizite Authentifizierung auf den geschützten Teil des Servers zugreifen darf. In einer bevorzugten Variante wird das Menü des Servers derart gestaltet, dass genügend Fingerabdrücke durch normale Betätigungen der haptischen Mittel zum Beispiel während der Navigation des Benutzers im besagten Menü gelesen werden, bevor der Benutzer auf diesen geschützten Teil des Servers gelangt.

Diese Methode hat auch den Vorteil, dass sie völlig kompatibel ist mit Mobilgeräten, die nicht über haptische Eingabemittel mit eingebauten Fingerabdrucklesern verfügen. In diesem Fall wird einfach eine übliche Authentifizierung (beispielsweise anhand von Passwörtern) verlangt, wenn der Benutzer in die geschützte Zone eintreten will.

Erreicht werden diese Ziele auch durch einen Server mit einem frei zugänglichen Teil und einem geschützten Teil, mit:
- einem Menüsystem, in welchem sich ein Benutzer mit Hilfe von Befehlen zumindest im besagten frei zugänglichen Teil bewegen kann und/oder navigieren kann,
- einem Komparator zum Vergleich von während einer Session ermittelten Benutzer-Fingerabdrücken mit Referenzfingerabdrücken,
wobei das besagte Menüsystem derart gestaltet ist, dass der Zugang auf den benannten Teil des Servers ohne explizite Identifizierungs- beziehungsweise Authentifizierungs-Aufforderung gegeben wird, wenn der besagte Benutzer während dem sich-Bewegen oder der Navigation im besagten frei zugänglichen Teil anhand des besagten Komparators identifiziert beziehungsweise authentifiziert wurde.

Erreicht werden diese Ziele insbesondere auch durch ein Programmprodukt, welches direkt in einem Speicherbereich ladbar ist, mit einem Programm, das das oben angegebene Verfahren durchführt, wenn es auf einem Prozessor läuft.

Dank der Methode der Erfindung und dem entsprechenden Server und/oder Programmprodukt wird der Benutzer iterativ identifiziert und/oder authentifiziert durch seine Fingerabdrücke, die gelesen werden, während er im frei zugänglichen Teil des Servers navigiert. Somit muss er nicht aufgefordert werden, seine Identifizierungs- und/oder Authentifizierungsdaten explizit einzugeben. Die Identifizierung und/oder Authentifizierung erfolgt ausserdem anhand einer grösseren Menge von Fingerabdruckdaten und die Sicherheit wird dadurch erhöht.

Die Analyse von Fingerabdruckdaten verlangt ausserdem wesentliche Datenverarbeitungsleistung. Wird die Identifizierung und/oder Authentifizierung des Benutzers in einem Mobilgerät mit begrenzter Leistung durchgeführt, dann kann diese Operation relativ lang werden. Dank der Methode der Erfindung und dem entsprechenden Server und/oder Programmprodukt wird die Identifizierung und/oder Authentifizierung des Benutzers vorzugsweise während seiner Navigation im frei zugänglichen Teil des Servers, bevor er auf einen geschützten Teil zugreifen will, durchgeführt. Die Identifizierung und/oder Authentifizierung wird also zum Beispiel in Totzeit durchgeführt und wird dann zeitunkritisch. Der Benutzer kann somit vorzugsweise unmittelbar auf den geschützten Teil des Servers zugreifen, wenn er es verlangt.

Die Erfindung wird anhand der Beschreibung einer bevorzugten Ausführungsform und mit Hilfe der Zeichnung besser verstanden. Es zeigt:

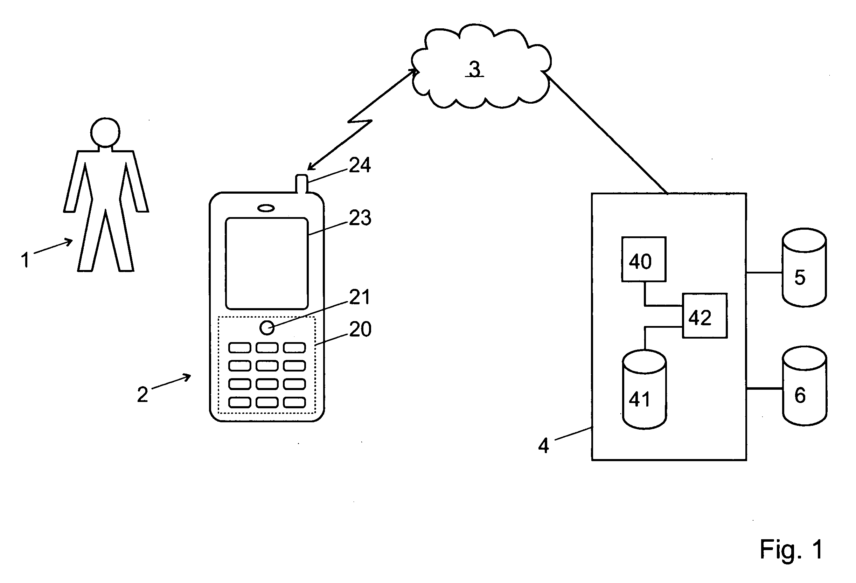

Fig. 1 eine schematische Darstellung eines Systems gemäss einer Ausführungsform der Erfindung.

Gemäss der Erfindung wird über ein Mobilfunknetzwerk 3 eine Datenverbindung aufgebaut zwischen einem Mobilgerät 2 eines Benutzers 1 und einem Server 4 zum Beispiel ein Web oder Wap-Server, der beispielsweise von einem Mehrwertdienstanbieter, oder von der Firma des Benutzers, betrieben wird. Der Server 4 kann auch ein LAN (Local Area Network) entsprechen, zum Beispiel ein Firmen-LAN mit mehreren Servern, das aus dem Internet für authentifizierte Benutzer zugänglich ist.

Das Mobilgerät 2 verfügt über eine Mobilfunkschnittstelle 24, um im Mobilfunknetz 3 zu kommunizieren und Daten zu senden und zu empfangen. Das Mobilgerät 2 umfasst vorzugsweise ein nicht dargestelltes Identifizierungsmodul zur Identifikation des Benutzers 1 und/oder des Mobilgeräts 2 im Mobilfunknetzwerk 3. Das Identifizierungsmodul ist zum Beispiel eine abnehmbare Chipkarte mit einem Speicherbereich, in welchem Identifizierungsdaten des Benutzers gespeichert sind. Ist das Mobilfunknetzwerk 3 zum Beispiel ein GSM-Netzwerk, dann ist die Chipkarte zum Beispiel eine SIM-Karte. Das Mobilgerät 2 verfügt vorzugsweise auch über eine Anzeige 23 und über haptische Eingabemittel, die mit den Fingern benutzt werden, um das Mobilgerät 2 und/oder den Fernserver über das Mobilfunknetz 3 zu steuern. Die haptischen Eingabemittel können zum Beispiel eine Tastatur sein, ein Keypad, ein Rollelement (zum Beispiel ein so genanntes "Jog-Wheel"), eine Maus, ein Stick, mit welchem ein Cursor gesteuert werden kann, ein Berührungsbildschirm oder ein Tastbildschirm, eine berührungsempfindliche Oberfläche, usw.

Erfindungsgemäss umfassen die haptischen Eingabemittel 20 einen Fingerabdruckleser, derart, dass Fingerabdrücke erfasst werden, wenn Befehle eingegeben werden, beispielsweise wenn eine Taste gedrückt oder wenn der Cursor bewegt wird.

In einer bevorzugten Variante umfassen die haptischen Eingabemittel einen kapazitiven berührungsempfindlichen Sensor, mit mehreren Zeilen von kapazitiven Elektroden, die auf Fingerbewegungen reagieren, um einen Cursor auf dem Bildschirm des Mobilgeräts zu steuern und/oder um Optionen oder Objekte anzuklicken. Mit demselben Sensor können auch Fingerabdrücke gleichzeitig erfasst werden. Solche haptischen Eingabemittel erlauben zum Beispiel die unbemerkte Erfassung von Fingerabdrücken während der Befehlseingabe. Bewegt sich ein Finger auf der kapazitiven Oberfläche, wird gleichzeitig ein Fingerabdruck erfasst, und die Richtung, Geschwindigkeit und Dauer der Bewegung wird als Befehl zur Steuerung des lokalen Mobilgeräts und/oder eines Fernservers über einen Cursor verwendet.

Der Fingerabdruckleser könnte auch in einer anderen Navigationstaste 21 integriert werden, welche üblicherweise zur Auswahl von Optionen in auf der Anzeige 23 angezeigten Menüs benutzt wird.

Der Fingerabdruckleser ist zum Beispiel ein kleiner und breiter Leser mit zum Beispiel einer Auflösung von 8 Punkten auf 196 Punkten. Ein solcher Fingerabdruckleser kann vorzugsweise die Bewegung eines Fingers auf seiner Oberfläche zum Beispiel kapazitiv und/oder optisch detektieren und zum Beispiel einen Cursor auf der Anzeige 23 des Mobilgeräts 2 gemäss der Richtung und/oder der Geschwindigkeit dieser Bewegung kontrollieren und gleichzeitig die Fingerabdrücke des Fingers scannen. Ein solcher Fingerabdruckleser kann also auch als Navigationstaste im Rahmen der Erfindung benutzt werden.

Vorzugsweise sind die Mobilfunkschnittstelle 24, das Identifizierungsmodul, die haptischen Eingabemittel 20 mit dem Fingerabdruckleser und der Anzeige 23 in einem einzigen Gerät 2 wie zum Beispiel in einem einzigen Mobiltelefon oder PDA (Personal Digital Assistant) integriert. In einer Variante der Erfindung sind aber diese Elemente auf zwei oder mehr Geräte verteilt. Das Mobilgerät 3 der Erfindung besteht dann zum Beispiel aus der Zusammensetzung eines Mobiltelefons und eines PDAs, wobei das Mobiltelefon zum Beispiel eine Mobilfunkschnittstelle und ein Identifizierungsmodul umfasst, und das PDA über haptische Eingabemittel mit einem Fingerabdruckleser verfügt. Als Anzeige des Mobilgeräts wird dann zum Beispiel die Anzeige des PDAs benutzt. Das Mobiltelefon und das PDA kommunizieren dann vorzugsweise über eine drahtlose oder kontaktlose Verbindung im Nahbereich oder über eine verdrahtete Verbindung. Die drahtlose Verbindung im Nahbereich ist zum Beispiel eine Bluetooth-, eine Infrarot- oder eine WiFi-Verbindung. Im Falle einer verdrahteten Verbindung kommunizieren zum Beispiel das Mobiltelefon und das PDA über eine serielle oder über eine USB Verbindung miteinander.

In einer Ausführungsform der Erfindung ist das Mobilfunknetz 3 zum Beispiel ein GSM-, HSCSD, GPRS, UMTS, Bleutooth, WLAN (wireless local area network)-Netzwerk. Weitere Ausführungsformen sind im Rahmen der Erfindung aber auch möglich.

Der Server 4 ist vorzugsweise ein Web-, Wap oder SMS-Server, ein SQL Server mit einer Datenbank, ein Datenserver, ein Netz von mehreren Servern in einem LAN, usw, und kann über einen Datenkanal des Mobilfunknetzes (zum Beispiel über das Internet oder einen anderen Paketkanal) erreicht werden. Der Server kann Befehle der Benutzer interpretieren, wobei der Begriff "Befehl" in diesem Rahmen eine breite Bedeutung hat und jegliche Daten umfassen soll, die vom Benutzer empfangen werden und das Verhalten des Servers beeinflussen. Der Server kann beispielsweise von einem Mehrwert-Dienstanbieter bereitgestellt werden, zum Beispiel einer Firma, einer Bank, einer Regierung, einem Mobilfunknetzoperator, usw.

Der Server umfasst einen frei zugänglichen Teil 5 und einen geschützten Teil 6. Im frei zugänglichen Teil können sich zum Beispiel generelle Informationen befinden über den Dienstanbieter und die vom Dienstanbieter angebotenen Mehrwertdienste, kommerzielle Informationen, Werbung, usw. die beispielsweise auf eine oder mehrere Web-Seiten oder WAP-Karten verteilt werden. Der Benutzer 1 braucht vorzugsweise nicht identifiziert zu sein, um auf diese Informationen zugreifen zu können. Es ist aber im Rahmen der Erfindung auch möglich, dass eine Benutzeridentifizierung verlangt wird, wenn der Benutzer auf bestimmte Seiten oder Daten des frei zugänglichen Teil zugreifen will; in diesem Fall kann der Benutzer beispielsweise aufgefordert werden, seine Identität manuell einzugeben. Diese Identität wird nicht geprüft, oder zumindest nicht mit biometrischen Mitteln und kann beispielsweise in einem Cookie im Mobilgerät abgelegt werden.

Im geschützten Teil 6 des Servers können zum Beispiel finanzielle Informationen, medizinische Informationen, Benutzer- oder Firmen-Daten, usw. vorhanden sein. Es können über diesen Teil 6 auch Mehrwertdienste angeboten werden, wie zum Beispiel die Möglichkeit, Zahlungsbefehle ab einem Bankkonto oder aus einem Kreditkartenkonto zu erteilen, gezielt und persönlich medizinischen Ratschlag zu erhalten, Produkte oder Dienstleistungen zu bestellen, usw. Weitere Typen von vertraulichen Informationen und Diensten sind im Rahmen der Erfindung auch möglich.

Um Zugang auf diese vertraulichen Informationen 6 und auf die verknüpften Dienste zu gewinnen, muss der Benutzer 1 identifiziert und authentifiziert sein. Das heisst, dass seine Identität bekannt sein muss und kontrolliert wird.

Die Identifizierung des Benutzers kann beispielsweise anhand der Anrufnummer des Mobilgeräts oder anhand von anderen Daten, die aus dem Identifizierungsmodul im Mobilgerät gelesen werden, erfolgen. Eine Identifizierung durch Vergleich der erfassten Fingerabdrücke des Benutzers mit Referenzabdrücken von mehreren Benutzern ist auch möglich. Der Benutzer kann im Rahmen der Erfindung auch seine Identität eintippen, sprechen oder mündlich über einen Sprachserver buchstabieren.

In einer Ausführungsform der Erfindung umfasst der Server 4 vorzugsweise einen Speicherbereich 40, welcher zum Beispiel zur temporären Speicherung von Identifizierungs- und/oder Authentifizierungsdaten dient. Wie später erläutert, umfassen die temporär gespeicherten Identifizierungs- und/oder Authentifizierungsdaten zum Beispiel die durch das Mobilgerät 2 gelesenen Fingerabdrücke des Benutzers 1.

In dieser Ausführungsform umfasst der Server 4 vorzugsweise auch eine Referenzdatenbank 41, die Identifizierungs- und/oder Authentifizierungs-Referenzdaten von auf den Server 4 registrierten Benutzern enthält. Die Referenzdaten umfassen zum Beispiel Referenzfingerabdrücke, die zum Beispiel während einem Registrierungsvorgang der Benutzer aufgenommen und gespeichert wurden.

Fingerabdrücke können entweder als Bild, oder vorzugsweise als Vektor oder Signatur, welche vorzugsweise im Mobilgerät 2 oder möglicherweise im Server 4 aus dem Fingerabdruck ermittelt werden, gespeichert und behandelt werden.

Der Server 4 umfasst vorzugsweise auch einen Komparator 42 zur Analyse und zum Vergleich von digitalen Fingerabdruckdaten. Der Komparator 42 wird vorzugsweise benutzt, um mit einer gewissen Sicherheit festzustellen, ob die durch das Mobilgerät 2 gelesenen Fingerabdrücke bestimmten Referenzfingerabdrücken entsprechen. Der Komparator wird vorzugsweise in Form eines Programms implementiert, welches zum Beispiel auf dem nicht dargestellten Server oder auf dem Mobilgerät 2 läuft. Es können beispielsweise Hidden Markov Models (HMMs), neuronale Netzwerke und/oder Viterbi-Netze verwendet werden, um Fingerabdrücke zu vergleichen. Der Komparator führt vorzugsweise auch eine Normalisierung der Fingerabdrücke aus, um Drehungen, Geräusche, andere geometrische Verzerrungen, die etwa durch Druckabweichungen entstehen, auszugleichen.

Der Verbindungsaufbau zwischen dem Mobilgerät 2 und dem Server 4 wird zum Beispiel durch die Betätigung mit einer bestimmten Taste, durch die Auswahl einer bestimmten Option in einem Menü, durch Eingabe einer Adresse in einem Browser, usw. auf der Seite des Mobilgeräts 2 getriggert. Erst nach dem Verbindungsaufbau gelangt der Benutzer 1 zum Beispiel auf eine öffentliche Empfangsseite des Servers 4. Die Empfangsseite wird vorzugsweise auf der Anzeige 23 des Mobilgeräts 2 angezeigt. Die Empfangsseite umfasst vorzugsweise ein Menü, aus welchem verschiedene Optionen (die zum Beispiel verschiedenen Mehrwertdiensten entsprechen) auswählbar sind. Um eine Option im Menü auszuwählen, benutzt der Benutzer 1 vorzugsweise die haptischen Eingabemittel 20 des Mobilgeräts 2, vorzugsweise haptische Eingabemittel 21 mit einem integrierten Fingerabdruckleser, um zum Beispiel einen Cursor auf einer graphischen oder Text-Oberfläche zu bewegen.

Erfindungsgemäss werden bei der Betätigung der haptischen Eingabemittel 21 während der Navigation des Benutzers 1 durch den frei zugänglichen Teil des Servers 4 die Fingerabdrücke des betätigenden Benutzers 1 durch den integrierten Fingerabdruckleser gleichzeitig gelesen. Die Fingerabdrücke werden zusammen oder separat vom Befehlen an den Server 4 übertragen, und als Bild oder vorzugsweise als Vektor im Speicherbereich 40 des Servers 4 gespeichert. Die Konversion in einem Vektor erfolgt vorzugsweise im Fingerabdruckleser. Es können auch mehrere Fingerabdrücke, oder eine Funktion, die im Mobilgerät aus mehreren Fingerabdrücken ermittelt wird, gleichzeitig an den Server 4 übertragen werden.

Gewisse Befehle, die vom Benutzer über die haptische Eingabemittel eingegeben werden, können vom Mobilgerät (beispielsweise vom Browserprogramm im Mobilgerät) interpretiert werden und nicht notwendigerweise an den Server übertragen werden. Werden während der Eingabe dieser Befehle Fingerabdrücke erfasst, werden diese Fingerabdrücke jedoch vorzugsweise verwendet und an den Server übertragen.

Umgekehrt kann es auch passieren, dass gewisse Befehle mit dem Mobilgerät eingegeben werden, ohne dass dabei ein Fingerabdruck erfasst wird.

In einer ersten Ausführungsform der Erfindung wird der Benutzer 1 mit Hilfe seiner Fingerabdrücke identifiziert und authentifiziert.

Die gelesenen und gespeicherten Fingerabdrücke werden vorzugsweise durch den Komparator 42 analysiert und mit den in der Referenzdatenbank 41 gespeicherten Referenzfingerabdrücken verglichen, um mit einer gewissen vordefinierten Wahrscheinlichkeit zu bestimmen, ob sie den Fingerabdrücken eines auf dem Server registrierten Benutzers entsprechen.

Vorzugsweise läuft die Identifizierung des Benutzers 1 iterativ. Bei jedem neuen Lesen der Fingerabdrücke des Benutzers 1 durch die Navigationstaste 21 werden zum Beispiel die gespeicherten Fingerabdruckdaten welche den Benutzer 1 betreffen, ergänzt und erneut mit den Referenzfingerabdruckdaten verglichen. Somit wird vorzugsweise bei jedem neuen Vergleich die Anzahl möglicher Identitäten für den Benutzer kleiner, bis zum Beispiel eine Identität mit einer vorbestimmten Wahrscheinlichkeit durch den Komparator erkannt wird.

Wünscht der Benutzer Zugriff auf geschützte und/oder vertrauliche Informationen 6 oder Dienste, dann wird dem Benutzer 1 die durch den Komparator 42 erkannte Identität vorzugsweise auf der Anzeige 23 des Mobilgeräts 2 zum Beispiel in Form eines Benutzernamens vorgeschlagen. Der Benutzer 1 muss dann diese Identität vorzugsweise durch Betätigung haptischer Eingabemittel bestätigen oder ablehnen.

Bestätigt der Benutzer 1 diese Identität nicht, dann wird zum Beispiel der Benutzer 1 auf einer nächsten Menüseite des Servers 4 gebeten, seine Identität (zum Beispiel mit Hilfe der Tastatur 20) selber einzugeben. In einer Variante wird dem Benutzer 1 eine Liste von anderen Identitäten vorgeschlagen, aus welcher er seine beanspruchte Identität vorzugsweise mit Hilfe der Navigationstaste 21 auswählen kann. Diese Identitäten werden zum Beispiel durch das Mobilgerät 2 und/oder durch den Server 4 vorgeschlagen. Sie umfassen zum Beispiel Identitäten, die im Mobilgerät 3 (zum Beispiel im Identifizierungsmodul) gespeichert sind. Vorzugsweise umfassen sie auch Identitäten, die mit einer kleineren Wahrscheinlichkeit als mögliche Identitäten für den Benutzer 1 durch den Komparator 42 erkannt wurden.

Der Benutzer kann somit anhand seiner Fingerabdrücke, seiner eigenen Angaben, seiner Anrufnummer und/oder Daten aus seinem Identifizierungsmodul identifiziert werden. Will er auf einen geschützten Teil 6 des Servers 4 zugreifen, muss er jedoch noch authentifiziert werden - diese Identität muss geprüft werden.

Wurde er während der Navigation im frei zugänglichen Teil des Servers zuverlässig durch den Vergleich zwischen den Fingerabdrücken und den Referenzfingerabdrücken authentifiziert, kann er vorzugsweise ohne weitere Kontrolle und insbesondere ohne explizite Authentifizierung, zum geschützten Teil des Servers gelangen und in diesem Teil auch Operationen durchführen. In einer bevorzugten Ausführungsform prüft der Server lediglich, ob der zugreifende Benutzer immer noch der vorerst authentifizierte Benutzer ist, beispielsweise indem eine Identifizierung der Session geprüft wird. Eine gültige Authentifizierung bleibt vorzugsweise nur während einer vorbestimmten Zeit gültig. Die Wahrscheinlichkeit, mit welcher der Benutzer 1 im Mobilgerät 2 und/oder im Server 4 authentifiziert wurde, wird somit vorzugsweise mit der Zeit als immer kleiner betrachtet, wenn keine neue Fingerabdrücke des Benutzers 1 gelesen werden. In einer anderen Ausführungsform wird die Identifizierung und/oder Authentifizierung zum Beispiel bei jedem neuen Verbindungsaufbau neu angefangen.

Kann also der Server 4 den Benutzer 1 zu diesem Zeitpunkt nicht mit der erforderlichen Sicherheit authentifizieren, wird eine explizite Authentifizierung verlangt, bevor der Benutzer zum geschützten Teil des Servers gelangen darf. Der Benutzer kann beispielsweise gebeten werden, weitere Fingerabdrücke mit dem Fingerabdruckleser 21 erfassen zu lassen, wobei ihm Anweisungen für die richtige Benutzung des Sensors ("Nicht zu schnell", "korrekte Bewegungsrichtung" usw.) wiedergegeben werden können.

Gelingt die Authentifizierung trotz dieser weiteren Versuche nicht, kann der Benutzer aufgefordert werden, sich anders authentifizieren zu lassen, zum Beispiel mit einem Passwort oder mit anderen biometrischen Parametern.

Das Menüsystem im frei zugänglichen Teil des Servers 4 ist vorzugsweise derart gestaltet, dass der Benutzer gezwungen wird, mehrmals seine Fingerabdrücke lesen zu lassen, wenn er aus dem freien Teil in den geschützten Teil gelangen will. Beispielsweise werden mehrere Kursorbewegungen oder Optionen-Auswählaktionen verlangt, damit mindestens zwei (möglicherweise wesentlich mehr) Fingerabdrücke erfasst werden, bevor der Benutzer auf die Seite gelangt, über welche er in den geschützten Teil des Servers 4 eintreten kann. Es kann auch absichtlich verlangt werden, dass der Benutzer Bewegungen seines Fingers in mehreren unterschiedlichen Richtungen durchführt, um den Kursor zu bewegen, bevor er in den geschützten Teil gelangt. Dies erlaubt das Sammeln von mehreren unterschiedlichen Fingerabdrücken und reduziert das Risiko, dass ein Benutzer explizit authentifiziert werden muss.

Der Benutzer gilt als authentifiziert, wenn die Wahrscheinlichkeit einer falschen Identifizierung (beziehungsweise Authentifizierung) kleiner ist als eine vorbestimmte Schwelle. Diese Schwelle wird vorzugsweise vom Betreiber des Servers 4 festgelegt.

Wird der Benutzer gemäss einer Ausführungsform der Erfindung anhand seiner Fingerabdrücke identifiziert und authentifiziert, dann ist es nicht nötig, dass er seine Identität und/oder ein Geheimnis zum Beispiel mit der Tastatur des Mobilgeräts eingeben muss, um im geschützten Teil des Servers 4 authentifiziert zu werden.

In anderen Ausführungsformen der Erfindung wird nur die Identifizierung des Benutzers mit Hilfe der Fingerabdruckdaten in der Serverapplikation durchgeführt. Der Benutzer 1 wird dann gebeten, diese automatisch ermittelte Identität beispielsweise durch ein Passwort prüfen zu lassen.

In einer Ausführungsform der Erfindung befindet sich eine Referenzdatenbank im Mobilgerät 2 selbst. Es werden zum Beispiel im Identifizierungsmodul (oder im Mobilgerät 2) während eines Registrierungsvorgangs Fingerabdrücke abgelegt. Diese Referenzfingerabdrücke sind dann vorzugsweise die Fingerabdrücke des üblichen Benutzers des Identifizierungsmoduls im Mobilgerät 2. Es können auch mehrere Referenzfingerabdrücke gespeichert werden, welche verschiedenen Benutzern des gleichen Mobilgeräts 2 entsprechen. Das Programm wird zum Beispiel als Applet aus dem Server 4 ferngeladen. Bei dem Registrierungsvorgang fordert das Programm zum Beispiel den oder die Benutzer auf, die haptischen Eingabemittel 21 zu betätigen, um Referenzabdrücke zu bekommen, bis genügend Daten für jeden Benutzer gelesen wurden, um gute Referenzfingerabdrücke zu bilden. Diese Referenzfingerabdrücke werden dann in der Referenzdatenbank im Mobilgerät und/oder im ldentifizierungsmodul gespeichert.

Das Programm ist vorzugsweise durch den Server 4 und/oder die entsprechenden Mehrwertdienstanbieter elektronisch signiert, damit eine Fälschung verunmöglicht wird.

Auch der Vergleich zwischen dem Referenzabdruck und den während einer Session ermittelten Abdrücken kann durch ein Programm im Mobilgerät 2 durchgeführt werden. Das Ergebnis dieses Vergleichs wird dann elektronisch signiert und (mit oder ohne Aufforderung) an den Server 4 gesendet. Der Vergleich wird beispielsweise von einem Komparator (zum Beispiel in Form eines Programms im Identifizierungsmodul und/oder im Mobilgerät 2) durchgeführt. Umfasst das Identifizierungsmodul einen Prozessor, dann läuft das Komparatorprogramm zum Beispiel auf dem Prozessor des Identifizierungsmoduls und/oder auf dem Prozessor des Mobilgeräts 2 selber. Das Komparatorprogramm wird vorzugsweise zum Beispiel als Applet vom Server 4 ferngeladen.

Ein Vorteil der Ausführungsform der Erfindung, in welcher die Referenzdatenbank und der Komparator im Mobilgerät 2 liegt ist, dass keine Fingerabdruckdaten zwischen dem Mobilgerät und dem Server 4 über das Mobilfunknetzwerk ausgetauscht werden. Die Fingerabdruckdaten bleiben somit sicher und vorzugsweise vertraulich beim Benutzer 1.

In einer Variante wird zur Identifizierung des Benutzers 1 der Komparator im Mobilgerät 2 benutzt, währenddessen für die Authentifizierung Vergleichsresultate aus einem Komparator 42 im Server 4 benutzt werden, oder umgekehrt.

In einer noch weiteren Ausführungsform sind die Referenzfingerabdrücke auf einem nicht dargestellten weiteren zentralen Server gespeichert. Der zentrale Server wird zum Beispiel durch einen Dritten oder durch den Betreiber des Mobilfunknetzwerks 3 für mehrere Dienstanbieter und/oder mehrere Server verwaltet. Der Komparator läuft dann vorzugsweise auch auf dem zentralen Server. Die gelesenen Fingerabdrücke werden dann zum Beispiel dem zentralen Server über das Mobilfunknetzwerk 3 zum Komparator geschickt. Dies hat unter anderem den Vorteil, dass der Benutzer sich nur einmal bei einem einzigen Server registrieren muss, um seine Fingerabdrücke abzulegen und einen authentisierten Zugang auf verschiedene Server verschiedener Dienstanbieter zu bekommen.

Die Menüs, durch welche der Benutzer navigieren muss, damit seine Fingerabdrücke mehrmals gelesen werden können, werden vorzugsweise durch den Server 4 generiert und auf der Anzeige 23 des Mobilgeräts 2 angezeigt.

In einer Ausführungsform der Erfindung, werden aber diese Menüs durch ein Programm im Mobilgerät generiert. Die nötigen Fingerabdruckdaten des Benutzers 1 werden somit vorzugsweise vor dem Verbindungsaufbau mit dem Server 4 gelesen. Läuft der Komparator auch im Mobilgerät, dann wird die Verbindung zum Beispiel nur dann aufgebaut, wenn der Benutzer 1 identifiziert und/oder authentifiziert wurde.

Die Identifizierung beziehungsweise Authentifizierung des Benutzers 1 kann vorzugsweise mit den Fingerabdrücken verschiedener Finger des Benutzers 1 durchgeführt werden. In einer Ausführungsform der Erfindung hängen die Menüs im frei zugänglichen Teil des Servers 4, im geschützten Teil des Servers 4 und/oder im Mobilgerät 2 vom Finger oder von den Fingern, die durch den Benutzer 1 zur Betätigung zum Beispiel der Navigationstaste 21 benutzt werden, und die möglicherweise zu seiner Identifizierung beziehungsweise Authentifizierung geführt haben. Unterschiedliche Menüs werden zum Beispiel generiert, falls der Benutzer 1 die rechte oder die linke Hand benutzt, um im Menüsystem zu navigieren, und möglicherweise mit den Fingerabdruckdaten von dieser Hand identifiziert beziehungsweise authentifiziert wurde. Der Benutzer kann also durch Benutzung einer bestimmten Hand und/oder bestimmter Finger zum Beispiel auf unterschiedlichen Optionen zugreifen. Weitere Kriterien können aber auch zur Generierung unterschiedlicher Menüs benutzt werden. Diese Kriterien umfassen zum Beispiel die Identität des Benutzers, den Authentifizierungsgrad des Benutzers 1, usw.

Die Identifizierung beziehungsweise Authentifizierung des Benutzers mit einem Fingerabdruckleser kann erfindungsgemäss auch die persönliche Richtung, Bewegung, Dauer und/oder Rhythmus der Bewegung des Benutzerfingers über den Sensor berücksichtigen; dadurch wird ein dynamischer Fingerabdruck verwendet, der mehr Informationen als statische enthält. Die Ermittlung der Bewegungsrichtung und Geschwindigkeit kann auch verwendet werden, um die Fingerabdrücke zu normalisieren, etwa um sie in Abhängigkeit der Bewegungsrichtung zu drehen.

## Patentansprüche

1. Methode zur Identifizierung und/oder zur Authentifizierung eines Benutzers (1) eines Mobilgeräts (2), welches ein Identifizierungsmodul zur Identifikation des Benutzers und/oder des Mobilgeräts (2) umfasst, in einer Serverapplikation anhand von Fingerabdrücken des besagten Benutzers (1) **dadurch gekennzeichnet, dass** besagte Fingerabdrücke, durch haptische Eingabemittel (21) erfasst werden, wobei die besagte Methode folgende Schritte umfasst:
- Der Benutzer (1) gibt mit den besagten haptischen Eingabemitteln (21) Befehle ein, um sich in einem frei zugänglichen Teil eines Servers (4) zu bewegen,
- gleichzeitig werden Fingerabdrücke des besagten Benutzers durch die besagten haptischen Eingabemittel (21) erfasst,
- spätestens wenn der besagte Benutzer auf einen geschützten Teil des Servers zugreifen will, der eine Identifizierung beziehungsweise eine Authentifizierung verlangt, wird der Benutzer anhand der besagten Fingerabdrücke identifiziert beziehungsweise authentifiziert,
- der Zugang auf den benannten geschützten Teil des Servers wird ohne explizite Identifizierungs- beziehungsweise Authentifizierungs-Aufforderung gegeben, wenn der besagte Benutzer im vorherigen Schritt identifiziert beziehungsweise authentifiziert wurde.

2. Die Methode des Anspruchs 1, bei welcher eine ausdrückliche Identifizierung beziehungsweise Authentifizierung verlangt wird, wenn der besagte Benutzer nicht zuverlässig durch die besagten Fingerabdrücke identifiziert beziehungsweise authentifiziert wurde.

3. Die Methode des Anspruchs 2, bei welcher der Benutzer aufgefordert wird, noch einmal seine Fingerabdrücke lesen zu lassen, wenn er nicht zuverlässig durch die besagten Fingerabdrücke identifiziert beziehungsweise authentifiziert wurde.

4. Die Methode eines der Ansprüche 2 oder 3, bei welcher der Benutzer aufgefordert wird, ein Passwort einzugeben, wenn er nicht zu-verlässig durch Fingerabdrücke identifiziert beziehungsweise authentifiziert wurde.

5. Die Methode eines der Ansprüche 1 bis 4, bei welcher der Benutzer identifiziert beziehungsweise authentifiziert wird, indem mehrere nacheinander während derselben Session erfasste Fingerabdrücke mit Referenzfingerabdrücken des Benutzers verglichen werden.

6. Die Methode eines der Ansprüche 1 bis 5, bei welcher der Benutzer als identifiziert beziehungsweise authentifiziert gilt, wenn die Wahrscheinlichkeit einer falschen Identifizierung beziehungsweise Authentifizierung kleiner ist als eine vorbestimmte Schwelle.

7. Die Methode des Anspruchs 6, bei welcher die besagte Schwelle vom Betreiber des besagten Servers festgelegt wird.

8. Die Methode eines der Ansprüche 5 bis 7, in welcher Hidden Markov Modelle und/oder neuronale Netze verwendet werden, um während einer Session erfasste Fingerabdrücke mit Referenzfingerabdrücken des Benutzers zu vergleichen.

9. Die Methode eines der Ansprüche 1 bis 8, bei welcher der besagte Benutzer anhand von Daten im besagten Identifizierungsmodul, oder anhand von selbst eingegebenen Angaben in einem ersten Schritt identifiziert wird,
und in welchem die während dem besagten ersten Schritt ermittelte Benutzeridentität anhand von während des Bewegens des Benutzers im benannten frei zugänglichen Teil der Servers erfassten Fingerabdrücken geprüft wird, um den besagten Benutzer zu authentifizieren.

10. Die Methode eines der Ansprüche 1 bis 9, bei welcher der besagte Server derart gestaltet ist, dass mehrere Fingerabdrücke des Benutzers mit den benannten haptischen Eingabemitteln gelesen werden, wenn dieser Benutzer im besagten frei zugänglichen Teil mit den benannten haptischen Eingabemitteln navigiert, um in den benannten geschützten Teil zu gelangen.

11. Methode gemäss einem der Ansprüche 1 bis 10, mit einem Registrierungsvorgang, bei welchem Referenzfingerabdrücke des Benutzers in einer Referenzdatenbank (41) des besagten Servers (4) gespeichert werden.

12. Methode gemäss einem der Ansprüche 1 bis 10, mit einem Registrierungsvorgang, bei welchem Referenzfingerabdrücke des Benutzers in einer Referenzdatenbank (41) im besagten Mobilgerät (2) gespeichert werden.

13. Methode gemäss einem der Ansprüche 1 bis 10, mit einem Registrierungsvorgang, bei welchem Referenzfingerabdrücke des Benutzers in einer Referenzdatenbank (41) im Server eines Dritten, welcher Benutzeridentifizierungen für mehrere Server verschiedener Anbieter durchführt, gespeichert werden.

14. Methode gemäss einem der Ansprüche 1 bis 13, bei welcher die benannte Identifizierung beziehungsweise Authentifizierung im besagten Server (4) erfolgt.

15. Methode gemäss einem der Ansprüche 1 bis 13, bei welcher die benannte Identifizierung beziehungsweise Authentifizierung im Server eines Dritten erfolgt, welcher Benutzeridentifizierungen für mehrere Server verschiedener Anbieter durchführt.

16. Methode gemäss einem der Ansprüche 1 bis 13, bei welcher die benannte Identifizierung beziehungsweise Authentifizierung im besagten Mobilgerät (2) erfolgt.

17. Methode gemäss dem Anspruch 16, bei welcher ein Benutzeridentifizierungsprogramm in das besagte Mobilgerät ferngeladen wird.

18. Methode gemäss Anspruch 17, wobei das besagte Programm elektronisch signiert wird.

19. Server (4), **gekennzeichnet durch** einen frei zugänglichen Teil und einen geschützten Teil, mit:
- einem Menüsystem, in welchem sich ein Benutzer (1) mit Hilfe von Befehlen zumindest im besagten frei zugänglichen Teil bewegen kann,
- einem Komparator (42) zum Vergleich von während einer Session ermittelten Benutzer-Fingerabdrücken mit Referenzfingerabdrücken,
wobei das besagte Menüsystem derart gestaltet ist, dass der Zugang auf den benannten geschützten Teil des Servers ohne explizite Identifizierungs- beziehungsweise Authentifizierungs-Aufforderung gegeben wird, wenn der besagte Benutzer während des sich-Bewegens im besagten frei zugänglichen Teil anhand des besagten Komparators identifiziert beziehungsweise authentifiziert wurde.

20. Der Server des Anspruchs 19, bei welchem der Benutzer aufgefordert wird, mehrmals seine Fingerabdrücke lesen zu lassen, wenn er aus dem besagten frei zugänglichen Teil in den benannten geschützten Teil gelangen will und er vorher nicht identifiziert beziehungsweise authentifiziert wurde.

21. Der Server (4) eines der Ansprüche 19 bis 20, mit einer Referenzdatenbank zur Speicherung der besagten Referenzfingerabdrücke.

22. Programmprodukt, welches direkt in einen Speicherbereich ladbar ist, mit einem Programm, das das Verfahren eines der Ansprüche 1 bis 18 durchführt, wenn es auf einem Prozessor läuft.

## Claims

1. Method for identifying and/or authenticating a user (1) of a mobile device (2) including an identification module for identifying the user and/or the mobile device (2), in a server application on the basis of fingerprints of said user (1), **characterized in that** said fingerprints are recorded through haptic input means (21), said method having the following steps:
- the user (1) enters commands with said haptic input means (21), in order to move in a freely accessible part of a server (4),
- simultaneously, finger prints of said user are recorded through said haptic input means (21),
- at the latest when said user wishes to access a secure part of the server that requires an identification respectively an authentication, the user is identified respectively authenticated on the basis of said fingerprints,
- access to said secure part of the server is granted without explicit identification respectively authentication request if said user has been identified respectively authenticated in the previous step.

2. The method of claim 1, wherein an explicit identification respectively authentication is required if said user has not been identified respectively authenticated reliably through said fingerprints.

3. The method of claim 2, wherein the user is invited to have his fingerprints read once again if he has not been identified respectively authenticated reliably through said fingerprints.

4. The method of one of the claims 2 or 3, wherein the user is invited to enter a password if he has not been identified respectively authenticated reliably through said fingerprints.

5. The method of one of the claims 1 to 4, wherein the user is identified respectively authenticated in that several fingerprints recorded consecutively during the same session are compared with reference fingerprints of the user.

6. The method of one of the claims 1 to 5, wherein the user is considered identified respectively authenticated if the probability of a wrong identification respectively authentication is smaller than a predetermined threshold.

7. The method of claim 6, wherein said threshold is set by the operator of said server.

8. The method of one of the claims 5 to 7, wherein Hidden Markov Models and/or neuronal networks are used for comparing fingerprints recorded during a session with reference fingerprints of the user.

9. The method of one of the claims 1 to 8, wherein said user is identified in a first step on the basis of data in said identification module or on the basis of self-entered indications,
and wherein the user identity determined during said first step is verified on the basis of fingerprints recorded during movement of the user in said freely accessible part of the server in order to authenticate said user.

10. The method of one of the claims 1 to 9, wherein said server is designed in such a manner that several fingerprints of the user are read with said haptic input means when this user navigates in said freely accessible part with said haptic input means in order to reach said secure part.

11. Method according to one of the claims 1 to 10, with a registration process during which reference fingerprints of the user are stored in a reference database (41) of said server (4).

12. Method according to one of the claims 1 to 10, with a registration process during which reference finger prints of the user are stored in a reference database (41) in said mobile device (2).

13. Method according to one of the claims 1 to 10, with a registration process during which reference fingerprints of the user are stored in a database (41) in the server of a third party that performs user identifications for several servers of different providers.

14. Method according to one of the claims 1 to 13, wherein said identification respectively authentication occurs in said server (4).

15. Method according to one of the claims 1 to 13, wherein said identification respectively authentication occurs in the server of a third party that performs user identifications for several servers of different providers.

16. Method according to one of the claims 1 to 13, wherein said identification respectively authentication occurs in said mobile device (2).

17. Method according to claim 16, wherein a user identification program is downloaded in said mobile device.

18. Method according to claim 17, said program being signed electronically.

19. Server (4), **characterized by** a freely accessible part and a secure part, with:
- a menu system wherein a user (1) can move with the aid of commands at least in said freely accessible part,
- a comparator (42) for comparing the user fingerprints recorded during a session with reference fingerprints,
- said menu system being designed in such a manner that access to said secure part of the server is granted without explicit invitation for identification respectively authentication if said user has been identified respectively authenticated on the basis of said comparator whilst moving in said freely accessible part.

20. The server of claim 19, wherein the user is invited to have his fingerprints read several times if he wishes to move from said freely accessible part into said secure part and if he has not been previously identified respectively authenticated.

21. The server (4) of one of the claims 19 to 20, with a reference database for storing said reference fingerprints.

22. Program product that can be loaded directly in a memory area, with a program that executes the method of one of the claims 1 to 18 if it runs on a processor.

## Revendications

1. Méthode pour identifier et/ou authentifier un utilisateur (1) d'un appareil mobile (2) incluant un module d'identification pour identifier l'utilisateur et/ou l'appareil mobile (2) dans une application serveur sur la base d'empreintes digitales dudit utilisateur (1), **caracterisée en ce que** lesdites empreintes digitales sont enregistrées par des moyens d'entrée haptiques (21), ladite méthode comprenant les étapes suivantes:
- l'utilisateur (1) entre des commandes avec lesdits moyens d'entrée haptiques (21), afin de se déplacer librement dans une partie accessible du serveur (4),
- simultanément, les empreintes digitales dudit utilisateur sont enregistrées par lesdits moyens d'entrée haptiques (21),
- au plus tard lorsque ledit utilisateur souhaite accéder à une partie sécurisée du serveur qui exige une identification, respectivement une authentification, l'utilisateur est identifié, respectivement authentifié, sur la base desdites empreintes digitales,
- l'accès à ladite partie sécurisée du serveur est autorisée sans identification et/ou respectivement une authentification explicite, si ledit utilisateur a été identifié ou respectivement authentifié à l'étape précédente.

2. La méthode de la revendication 1, dans laquelle une identification, respectivement authentification, est explicitement demandée si ledit utilisateur n'a pas été identifié, respectivement authentifié, de manière fiable par lesdites empreintes digitales.

3. La méthode de la revendication 2, dans laquelle l'utilisateur est invité à faire lire ses empreintes digitales encore une fois quand il n'a pas été identifié, respectivement authentifié, de manière fiable par lesdites empreintes digitales.

4. La méthode de l'une des revendications 2 ou 3, dans laquelle on demande à l'utilisateur d'introduire un mot de passe lorsqu'il n'a pas été identifié, respectivement authentifié, de manière fiable.

5. La méthode de l'une des revendications 1 à 4, dans laquelle l'utilisateur est identifié, respectivement authentifié par la comparaison de plusieurs empreintes digitales enregistrées consécutivement pendant la même session et comparées à des empreintes digitales de référence de l'utilisateur.

6. La méthode de l'une des revendications 1 à 5, dans laquelle l'utilisateur est considéré comme identifié, respectivement authentifié, si la probabilité d'une mauvaise identification, respectivement authentification, est inférieure à un seuil prédéterminé.

7. La méthode de la revendication 6, dans laquelle ledit seuil est établi par l'opérateur dudit serveur.

8. La méthode de l'une des revendications 5 à 7, dans laquelle des modèles de Markov cachés et/ou des réseaux neuronaux sont utilisés pour comparer des empreintes digitales saisies avec des empreintes digitales de référence lors d'une session.

9. La méthode de l'une des revendications 1 à 8, dans laquelle ledit utilisateur est identifié dans une première étape à l'aide de données dans ledit module d'identification, ou à l'aide d'indications entrées par lui-même,
et dans laquelle l'identité de l'utilisateur déterminée durant ladite première étape est vérifiée par les empreintes digitales saisies durant les déplacements de l'utilisateur dans ladite partie librement accessible du serveur, afin d'authentifier ledit utilisateur.

10. La méthode de l'une des revendications 1 à 9, dans laquelle ledit serveur est conçu de telle sorte que plusieurs empreintes digitales de l'utilisateur sont lues par les moyens d'entrée haptiques, lorsque cet utilisateur navigue dans ladite partie librement accessible avec lesdits moyens d'entrée haptiques afin de se rendre dans la partie sécurisée.

11. Méthode selon l'une des revendications 1 à 10, avec un processus d'enregistrement, dans lequel les empreintes digitales de référence de l'utilisateur sont sauvegardées dans une base de données de référence (41) dudit serveur (4).

12. Méthode selon l'une des revendications 1 à 10, avec un processus d'enregistrement, dans lequel les empreintes digitales de référence de l'utilisateur sont sauvegardées dans une base de données de référence (41) dans ledit appareil mobile (2).

13. Méthode selon l'une des revendications 1 à 10, avec un processus d'enregistrement, dans lequel les empreintes digitales de référence de l'utilisateur sont sauvegardées dans une base de données de référence (41) dans le serveur d'un tiers, qui effectue des identifications d'utilisateurs pour plusieurs serveurs de différents opérateurs.

14. Méthode selon l'une des revendications 1 à 13, dans laquelle le processus d'identification, respectivement d'authentification, a lieu dans ledit serveur (4).

15. Méthode selon l'une des revendications 1 à 13, dans laquelle le processus d'identification, respectivement d'authentification, a lieu dans le serveur d'un tiers qui effectue des identifications d'utilisateurs pour plusieurs serveurs de différents opérateurs.

16. Méthode selon l'une des revendications 1 à 13, dans laquelle le processus d'identification, respectivement d'authentification, a lieu dans ledit appareil mobile (2).

17. Méthode selon la revendication 16, dans laquelle un programme d'identification d'utilisateur est téléchargé dans ledit appareil mobile.

18. Méthode selon la revendication 17, dans laquelle ledit programme est signé électroniquement.

19. Serveur, **caractérisé par** une partie accessible librement et une partie sécurisée, avec:
- un système de menu dans lequel un utilisateur (1) peut se déplacer à l'aide de commandes au moins dans ladite partie accessible librement,
- un comparateur (42) for comparer les empreintes digitales de l'utilisateur enregistrées dans une session avec des empreintes digitales de référence,
- ledit menu étant conçu de telle sorte que l'accès à la partie sécurisée est attribuée sans invitation explicite pour l'identification, respectivement authentification, si ledit utilisateur a été identifié, respectivement authentifié, sur la base dudit comparateur alors qu'il se déplaçait dans ladite partie librement accessible.

20. Le serveur de la revendication 19, dans lequel l'utilisateur est invité à faire lire ses empreintes digitales plusieurs fois, lorsqu'il veut se rendre dans ladite partie sécurisée depuis ladite partie librement accessible, et qu'il n'a pas été identifié, respectivement authentifié.

21. Le serveur (4) de l'une des revendications 19 à 20, avec une base de données de référence pour sauvegarder lesdites empreintes digitales de référence.

22. Produit logiciel qui peut être téléchargé directement depuis un espace mémoire, avec un programme qui exécute le procédé selon les revendications 1 à 18 lorsqu'il tourne sur un processeur.
